# EUROPEAN PATENT SPECIFICATION

(11) **EP 4 506 250 B1**
(45) Date of publication and mention of the grant of the patent: **23.09.2026**
(21) Application number: 24192432.3
(22) Date of filing: 01.08.2024
(51) Int. Cl.: B64D 11/06

(54) **CONJOINABLE REVERSE HERRINGBONE PASSENGER SEAT**
ZUSAMMENSETZBARER PASSAGIERSITZ MIT UMGEKEHRTEM FISCHGRÄTENMUSTER
SIÈGE PASSAGER À CHEVRONS INVERSÉS POUVANT ÊTRE RELIÉS ENSEMBLE

(30) Priority: 07.08.2023 US 202318230981
(43) Date of publication of application: 12.02.2025
(73) Proprietor: B/E Aerospace, Inc., Winston-Salem, NC 27105 (US)
(72) Inventor: RUIZ LARA, Oscar, Kirkland (US); SANTIAGO, Mauricio, Redmond (US); VANINETTI, Travis J., Bothell (US); GUTOSKY, Joseph M., Kernersville (US); BLANC, Matteo, Winston-Salem (US)
(74) Representative: Dehns

(56) References cited:
- US-A1- 2019 315 468
- US-A1- 2020 148 363
- US-A1- 2021 009 271
- US-A1- 2021 214 086
- US-A1- 2022 024 593

## Description

### FIELD

This disclosure relates broadly to the field of aircraft, and more specifically to aircraft seating arrangements.

### BACKGROUND

Space saving reverse herringbone seating configurations have become popular in aircraft because they allow increased passenger density without decreasing passenger comfort. Likewise, so called mini-suite passenger compartments have become popular in luxury transcontinental passenger sections. Mini-suites are generally defined by a door providing privacy to a seat separated from an adjacent mini-suite by a wall. However, because of the positioning of seats in a reverse herringbone seating configuration may be largely isolated from each other. While this may be desirable for passengers traveling alone, it may be undesirable for couples, families, or passengers otherwise traveling as a group. Therefore, it may be desirable to create a seating arrangement that cures the above deficiencies.

US 2022/024593 A1 discloses a seating arrangement for an aircraft with a first seat in a first accommodation space and a second seat in a second accommodation space, wherein the first and second accommodation spaces are configured to share a common floor space at a floor level of the aircraft. One seating arrangement includes a divider screen located between the first and second accommodation spaces, moveable, by sliding in a direction along the common floor space, between a stowed position permitting passenger egress between the first and second accommodation spaces across the common floor space, and a deployed position preventing passenger egress between the first and second accommodation spaces across the common floor space.

US 2020/148363 A1 discloses an arrangement of individual seats intended to be installed in a cabin of an aeroplane, the arrangement of seats comprising at least one assembly of two seats turned towards the interior in the direction of the longitudinal axis of the arrangement, characterised in that: an end assembly comprises a first seat and a second seat, each seat being convertible between a sitting position and a recumbent position in which the seat defines a bed surface, and an intermediate element having a surface, referred to as the intermediate surface, located in the same plane as the bed surfaces of the first seat and of the second seat, such that the bed surfaces of the first seat and of the second seat as well as the intermediate surface form a common bed surface

US 2019/315468 A1 discloses an arrangement of individual seats for installation in an aeroplane cabin having a first set of two seats and a second set of two seats, each seat having an axis and being convertible between a sitting position and an extended position, said arrangement having a longitudinal axis. The arrangement also includes (i) a first central console having a first foot area and a second foot area open in two opposite directions relative to each other and respectively associated with the first seat of the first set and the first seat of the second set and (ii) a second central console having a first foot area and a second foot area open in two opposite directions relative to each other and respectively associated with the second seat of the first set and the second seat of the second set.

US 2021/009271 A1 discloses a seat unit for an aircraft that includes an intermediate portion disposed between a first seat and a second seat. In a bed state, the intermediate portion is adjacent to a first backrest and a second backrest while a height of an upper surface of the intermediate portion substantially coincides with the height of the first backrest and the second backrest. The intermediate portion includes a vertically movable partition plate. In a state in which the partition plate is housed in the intermediate portion, the upper end of the partition plate is located at or below the height of the upper surface of the intermediate portion, and when the partition plate is raised, the upper end of the partition plate can move to a position above the eye level of a user seated on a at least a first seating portion or a second seating portion in a seat state.

US 2021/214086 A1 discloses an aircraft seat for an aircraft passenger compartment. In embodiments, the aircraft seat includes a primary section including a primary seatback portion and a primary seat base portion, and an auxiliary section including an auxiliary seatback portion and an auxiliary seat base portion. In embodiments, the aircraft seat may further include an actuatable element configured to actuate between an open position and a closed position. The actuatable element may include a first surface which defines at least a portion of the auxiliary seatback portion when the actuatable element is in the closed position, and a second surface which defines a surface of an armrest when the actuatable element is in the open position.

### SUMMARY

An aircraft seating arrangement as claimed in claim 1 is disclosed, in accordance with an aspect of the present invention.

Further, optional features are recited in each of dependent claims 2 to 15.

This Summary is provided solely as an introduction to subject matter that is fully described in the Detailed Description and Drawings. The Summary should not be considered to describe essential features nor be used to determine the scope of the Claims. Moreover, it is to be understood that both the foregoing Summary and the following Detailed Description are example and explanatory only and are not necessarily restrictive of the subject matter claimed.

### BRIEF DESCRIPTION OF THE DRAWINGS

The detailed description is described with reference to the accompanying figures. The use of the same reference numbers in different instances in the description and the figures may indicate similar or identical items. Various embodiments or examples ("examples") of the present disclosure are disclosed in the following detailed description and the accompanying drawings. The drawings are not necessarily to scale. In general, operations of disclosed processes may be performed in an arbitrary order, unless otherwise provided in the claims. In the drawings:
FIG. 1A is a perspective view of a mini-suite with a seat in a sitting position, in accordance with one or more embodiments of the present disclosure.
FIG. 1B is a perspective view of a mini-suite with a seat in a berthed position, in accordance with one or more embodiments of the present disclosure.
FIG. 2A is a top perspective view of a mini-suite with a partition engaged and preventing access to an adjacent mini-suite, in accordance with one or more embodiments of the present disclosure.
FIG. 2B is a perspective view of a mini-suite with a partition engaged and preventing access to an adjacent mini-suite, in accordance with one or more embodiments of the present disclosure.
FIG. 2C is a top perspective view of a mini-suite with a partition disengaged and allowing access to an adjacent mini-suite, in accordance with one or more embodiments of the present disclosure.
FIG. 3A is a top view of a mini-suite and an adjacent mini-suite with seats in a sitting position, in accordance with one or more embodiments of the present disclosure.
FIG. 3B is a top view of a mini-suite and an adjacent mini-suite with seats in a berthed position, in accordance with one or more embodiments of the present disclosure.
FIG. 4A is a perspective view of a mini-suite and an adjacent mini-suite with seats in a sitting position highlighting a joint sitting area, in accordance with one or more embodiments of the present disclosure.
FIG. 4B is a perspective view of a mini-suite and an adjacent mini-suite with seats in a berthed position highlighting a joint sleeping area, in accordance with one or more embodiments of the present disclosure.
FIG. 4C is a top view of a mini-suite with a seat in a sitting position highlighting an extended seating area, in accordance with one or more embodiments of the present disclosure.
FIG. 4D is a top view of a mini-suite with a seat in a berthed position highlighting an extended sleeping area, in accordance with one or more embodiments of the present disclosure.
FIG. 5A is a perspective view of a mini-suite with a seat in a sitting position and a console folded into the rear wall of the mini-suite, in accordance with one or more embodiments of the present disclosure.
FIG. 5B is a perspective view of a mini-suite with a seat in a sitting position and a console folded down from the rear wall of the mini-suite, in accordance with one or more embodiments of the present disclosure.
FIG. 6 is a perspective view of secondary furniture including a storage compartment, in accordance with one or more embodiments of the present disclosure.
FIG. 7A is a top view highlighting a mini-suite and an adjacent mini-suite located behind reverse herringbone seats, in accordance with one or more embodiments of the present disclosure.
FIG. 7B is a top view highlighting a mini-suite and an adjacent mini-suite located behind forward facing seats, in accordance with one or more embodiments of the present disclosure.

### DETAILED DESCRIPTION

Before explaining one or more embodiments of the disclosure in detail, it is to be understood that the embodiments are not limited in their application to the details of construction and the arrangement of the components or steps or methodologies set forth in the following description or illustrated in the drawings. In the following detailed description of embodiments, numerous specific details may be set forth in order to provide a more thorough understanding of the disclosure. However, it will be apparent to one of ordinary skill in the art having the benefit of the instant disclosure that the embodiments disclosed herein may be practiced without some of these specific details. In other instances, well-known features may not be described in detail to avoid unnecessarily complicating the instant disclosure.

As used herein a letter following a reference numeral is intended to reference an embodiment of the feature or element that may be similar, but not necessarily identical, to a previously described element or feature bearing the same reference numeral (e.g., 1, 1a, 1b). Such shorthand notations are used for purposes of convenience only and should not be construed to limit the disclosure in any way unless expressly stated to the contrary.

Further, unless expressly stated to the contrary, "or" refers to an inclusive or and not to an exclusive or. For example, a condition A or B is satisfied by any one of the following: A is true (or present) and B is false (or not present), A is false (or not present) and B is true (or present), and both A and B are true (or present).

In addition, use of "a" or "an" may be employed to describe elements and components of embodiments disclosed herein. This is done merely for convenience and "a" and "an" are intended to include "one" or "at least one," and the singular also includes the plural unless it is obvious that it is meant otherwise.

Finally, as used herein any reference to "one embodiment" or "some embodiments" means that a particular element, feature, structure, or characteristic described in connection with the embodiment is included in at least one embodiment disclosed herein. The appearances of the phrase "in some embodiments" in various places in the specification are not necessarily all referring to the same embodiment, and embodiments may include one or more of the features expressly described or inherently present herein, or any combination of or sub-combination of two or more such features, along with any other features which may not necessarily be expressly described or inherently present in the instant disclosure.

Aircraft have adopted various seating configuration to best accommodate first class and business class demand for space and accommodations, while attempting to maximize the number of passengers that can be fit onto the aircraft. Such configurations include, but are not limited to, forward facing seats (e.g., passengers face the direction the plane is going), herringbone seats (e.g., passengers are angled such that they face towards the aisle), and reverse herringbone seats (e.g., passengers are angled such that they face away from the aisle). Further, various staggering and spacing schemes have been implemented in conjunction with the various seating configurations.

Additionally, in many first class and business class cabins, seats are configured in such a manner where each seat is housed within their own mini-suite on the aircraft. In this way, various considerations are given to create a mini-suite in a manner that is suitable private. Such considerations include dividers or partitions between other seats and/or the aisle and doors on each mini-suite. However, mini-suites in aircraft are required to comply with various regulations set forth by government agencies. Examples of such regulations may be found in "Proposed Special Condition on Installation of mini-suite type seating Applicable to Airbus A350" as set forth by the European Union Aviation Safety Agency (EASA).
Therefore, the mini-suites disclosed herein should be considered to comply with said regulations.

A mini-suite in an aircraft may be a seating arrangement surrounded by walls such that a passenger sitting in the mini-suite may have enhanced privacy. Each mini-suite may include a single seat with additional furniture, such as, but not limited to, center consoles, entertainment systems, or the like. Mini-suites may be separated from an adjacent mini-suite by things such as, but not limited to, center consoles, removable partitions, walls, or the like. To further enhance privacy, each mini-suite may include a door, though a mini-suite is not required to have a door.

In a general sense, an aircraft seat may be formed from three main parts: a footrest, a seat bottom, and a backrest.

On many longer flights it may be desirable for a seat to recline into various positions. For example, a seat may be configured to be in a sitting position. The sitting position may be the default position of the seat and resemble a chair (e.g., the footrest and backrest are vertical or approximately vertical and the seat bottom is horizontal or approximately horizontal). Further, a sitting position may be the required position for taxi, takeoff, and landing (TTOL).

A seat may also be adjustable to a berthed position. The berthed position may correspond to the footrest, seat bottom, and backrest being aligned in such a manner all three components are horizontal or are approximately horizontal. In this way, a berthed position of a seat may correspond to the seat being used as a bed.

A seat may also be adjustable to a slouched position. Broadly speaking, a slouched position may be any position of the seat within the seat's range of adjustment between the sitting position and the berthed position.

One of many features that may be present in a mini-suite is a center console. The center console may provide features to the passenger that is sitting in the mini-suite, such as storage, a table, and/or a divider between an adjacent passenger. However, it also provides a footwell. This provides additional legroom to a passenger in the mini-suite behind, which permits the seat to enter the berthed position without taking up an unnecessary amount of room, but providing a space for the footrest of the seat to enter and occupy when the seat is in the berthed position.

However, in the aft, or rear, row of a cabin, the inclusion center console including a footwell for the mini-suite behind is unnecessary, as there is no mini-suite behind the aft row. Therefore, the inclusion of such a center console can create wasted space in the mini-suite.

In a reverse herringbone configuration, the placement and orientation of the seats may create a private and secluded flight experience (e.g., because of dividers and/or the distance between the seats). While this may be desirable for those traveling alone, it may not be desirable for others. For example, those traveling together (e.g., family, couples, or friends) may wish to have a less secluded flight experience. Further, those traveling alone may wish to have additional sitting and/or sleeping space in their mini-suite. Therefore, in the aft row of a cabin (e.g., where legroom and/or the berthed position of a passenger in any row behind do not need to be taken into account) the center console may be removed and replaced with an extended, or shareable surface. In this way, the surface (e.g., the sleeping or sitting surface) in the mini-suite may be extended or two adjacent mini-suites may form a shared surface.

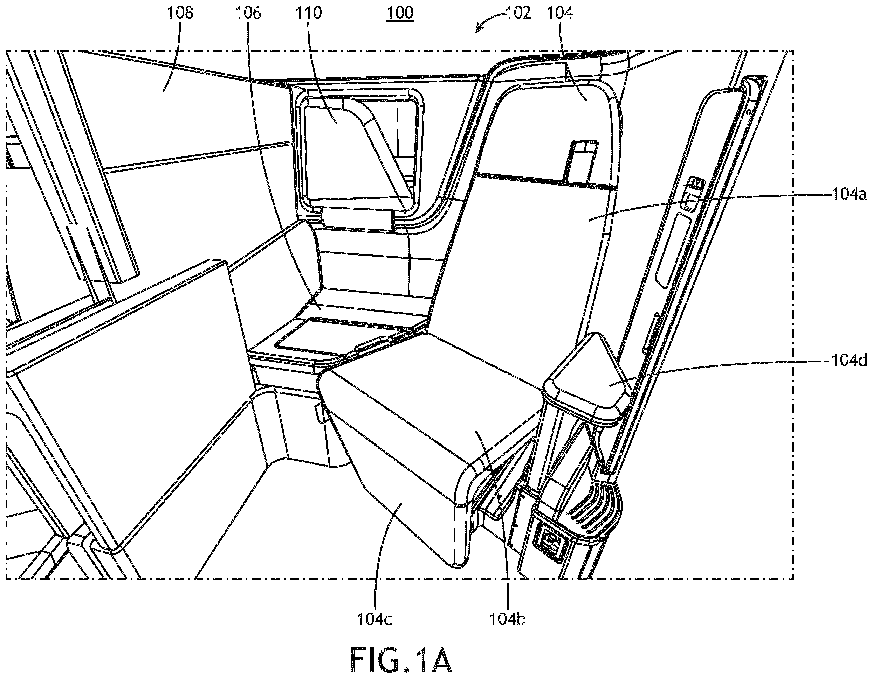

Referring now to FIGS. 1A-7B, an aircraft seating arrangement 100 and a mini-suite 102 are disclosed, in accordance with one or more embodiments of the present disclosure.

FIG. 1A is a perspective view of a mini-suite 102 with a seat 104 in a sitting position, in accordance with one or more embodiments of the present disclosure.

In embodiments, the mini-suite 102 includes a seat 104. The seat 104 may include a seatback 104a, a seat bottom 104b, a footrest 104c, and one or more armrests 104d. In embodiments, the seatback. may include a headrest, which may be a discrete component or integrated into the seatback 104c.

The seatback 104a, the seat bottom 104b, the footrest, 104c, and the one or more armrests 104d may be any group of structures capable of being arranged relative to each other in order to form a seat 104. For example, the seatback 104a, the seat bottom 104b, the footrest, 104c, and the one or more armrests 104d may have any given either spatial or ergonomic considerations. Further, the seatback 104a, the seat bottom 104b, the footrest, 104c, and the one or more armrests 104d may have any surface profile that may be required by ergonomic considerations or spatial considerations (e.g., the seatback 104a, the seat bottom 104b, the footrest, 104c, and the one or more armrests 104d may have a raised edges to cradle a passenger, the seatback 104a, the seat bottom 104b, the footrest, 104c, and the one or more armrests 104d may have rounded edges, or the like). Further, the seatback 104a, the seat bottom 104b, the footrest, 104c, and the one or more armrests 104d may be padded. The seatback 104a, the seat bottom 104b, the footrest, 104c, and the one or more armrests 104d may also include a covering (e.g., cloth, leather, faux leather, polyester, or the like).

The seat 104 may be configured in any one of a sitting position, a slouched position, or a berthed position. For example, the seatback 104a, the seat bottom 104b, and/or the footrest 104c may change positions relative to each other in order to change the configuration of the seat 104. Further, the height of the armrest 104d may be adjustable (e.g., the height and/or angle of the armrest 104d may be adjustable) in order to accommodate a passenger when the seat 104 is in any configuration. In this way, the armrest 104d may be adjustable to match the orientation of the seat 104 (e.g., the height and/or angle of the seat 104) when the seat 104 is in any of the sitting position, the slouched position, or the berthed position.

In embodiments, the mini-suite 102 includes secondary furniture 106. The secondary furniture 106 may be located between the seat 104 and a partition 108. Similar to the components of the seat 104, the secondary furniture 106 may be any shape and/or have any surface profile. Further, the secondary furniture 106 may be padded and include a covering. The thickness of the padding and/or the covering chosen may be chosen to match the seat 104. The secondary furniture 106 may be positioned such that the secondary furniture 106 and the armrest 104d are disposed on opposite sides of the seat. Further, the secondary furniture 106 may be built into the walls of the mini-suite 102 such that the secondary furniture 106 forms part of the perimeter of the mini-suite 102. While it may be beneficial for the height and/or the orientation of the secondary furniture 106 to be adjustable, the height and/or the orientation may be fixed.

Further, a top surface of the secondary 106 furniture may be adjustable to match the orientation (e.g., height and/or angle) of the seat 104 in any of the sitting position, slouched position, or the berthed position. Such adjustable secondary furniture 106 is disclosed in U.S. Patent Application Serial No. 18/230,844, entitled SEAT EXTENSION FURNITURE FOR AIRCRAFT SEATS and having docket number 176531US01. In this way, the adjustable orientation of the secondary furniture may provide for an extended seating area in the mini-suite 102 or an extended sleeping area in the mini-suite 102, depending on whether or not the seat 104 is in the sitting or slouched position (e.g., an extended seating area) or the seat 104 is in the berthed position (e.g., an extended sleeping area).

In embodiments, the mini-suite 102 includes a partition 108. The partition 108 may be a structure (e.g., a thin rectangular structure) that separates two mini-suites 102 from each other. Further the partition may be able to disengage (e.g., removable, slide into a hidden compartment, or the like) such that two mini-suites 102 may be joined.

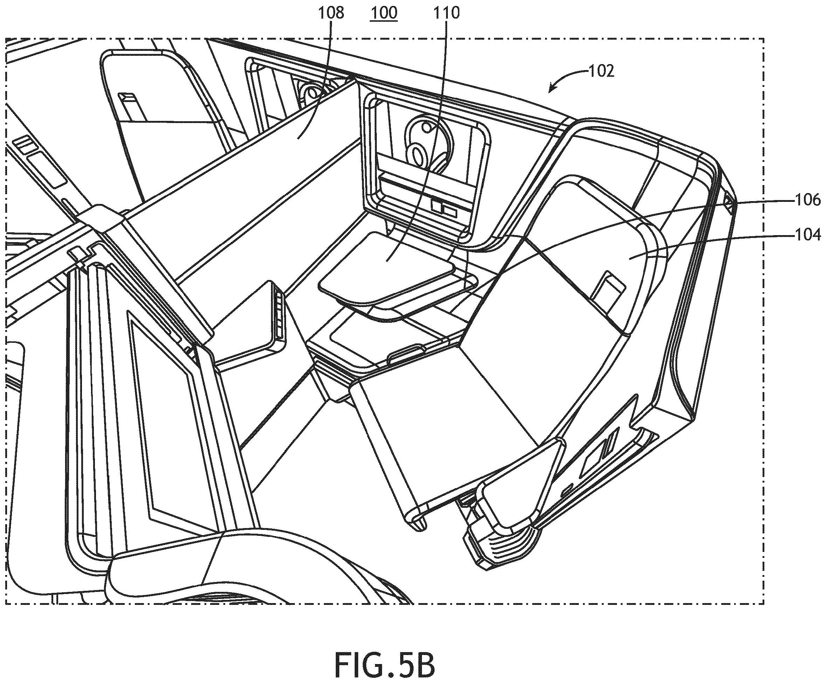

In embodiments, the mini-suite 102 includes a console 110. Similar to the components of the seat 104 and/or the secondary furniture 106, the console 110 may be any shape and/or have any surface profile. Further, the console 110 may be padded and include a covering. The thickness of the padding and/or the covering chosen may be chosen to match the seat 104 and/or the secondary furniture 106. Further, the console 110 may be stowable. In this way, the console may fold into the rear wall of the mini-suite 102, or fold down from the rear wall of the mini-suite 102 (e.g., as in FIG. 5B).

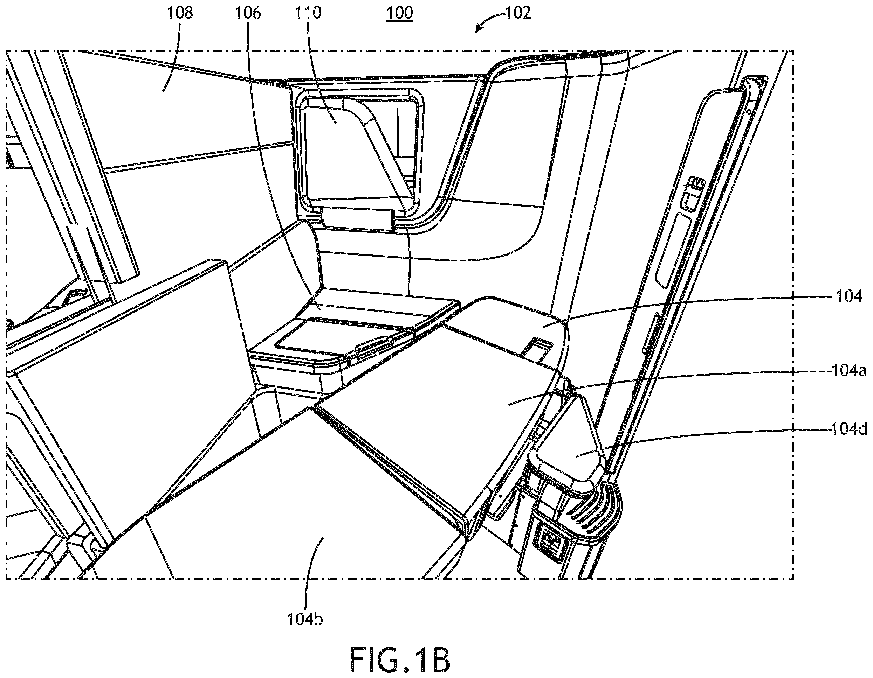

FIG. 1B is a perspective view of a mini-suite 102 with a seat 104 in a berthed position, in accordance with one or more embodiments of the present disclosure.

In FIG. 1B, the seat 104 has been changed from a sitting position (e.g., as shown in FIG. 1A) to a berthed position. Further, in FIG. 1B, it should be noted, the height and angle (e.g., the orientation) of the armrest 104d has been adjusted to match the orientation of the seat 104 in the berthed position. Also, the orientation of the secondary furniture 106 has been changed to match the orientation of the seat 104 in the berthed position.

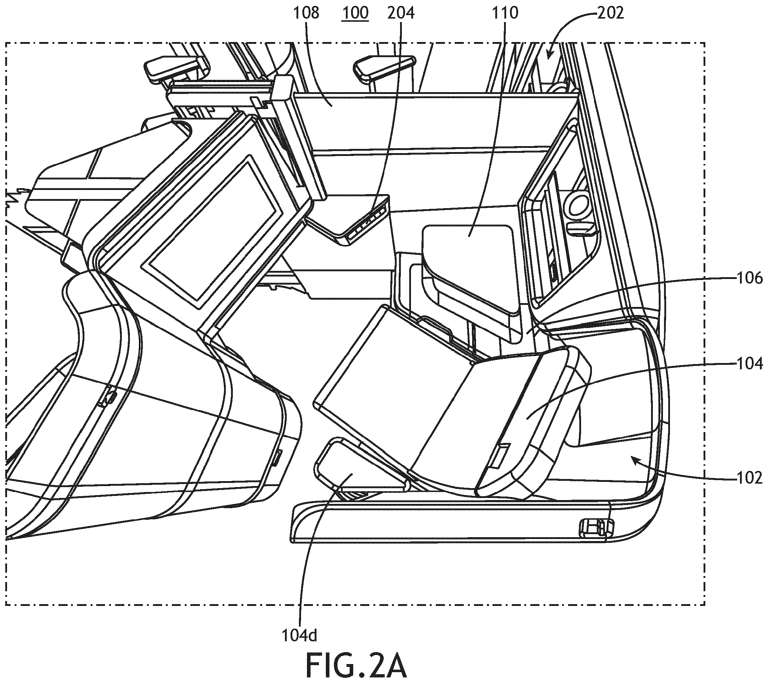

FIG. 2A is a top perspective view of a mini-suite 102 with a partition 108 engaged and preventing access to an adjacent mini-suite 202, in accordance with one or more embodiments of the present disclosure. It should be noted that the mini-suite 102 and the adjacent mini-suite 202 may include the same, or largely the same components as one another. Therefore, the arrangement of the adjacent mini-suite 202 may be chiral of the mini-suite 102.

For example, FIG. 2A may correspond to a configuration of the seating arrangement 100 where the passengers in the mini-suite 102 and the adjacent mini-suite 202 are traveling individually, and thus wish to have privacy. Therefore, the partition between the mini-suite 102 and the adjacent mini-suite 202 is engaged to divide the two areas of the seating arrangement 100.

When a mini-suite 102 is adjacent to a secondary mini-suite 202 a seating arrangement may include two or more seats 104 and two or more pieces of secondary furniture 106. In embodiments, the mini-suite 102 may include a first seat 104 and a first piece of secondary furniture 106 and the adjacent mini-suite 202 may include a second seat 104 and a second piece of secondary furniture 106). The first piece of secondary furniture 106 may be disposed proximal to a first seat 104 (e.g., the first piece of secondary furniture 106 may be next to the first seat 104 in the mini-suite 102) and the second piece of secondary furniture 106 may be disposed proximal to a second seat 104 (e.g., the second piece of secondary furniture 106 may be next to the second seat 104 in the adjacent mini-suite 202).

Further, the mini-suite 102 may include controls 204. The controls 204 may be used to control the position of the seat 104, a top surface of secondary furniture 106 (e.g., to match the orientation of the seat 104), and/or the armrest 104d. Further, there may be controls to control any aspect of the mini-suite 102 (e.g., entertainment systems, the position of the console 110, or the like). It should be noted that the controls 204 need not be located on a single panel, or in a single location. For example, if the controls 204 are located on a single panel or a single location they may be located anywhere in the mini-suite 102. For example, the controls 204 may be located at various positions in the mini-suite 102 such that individual controls 204 are near, or located on, what they are intended to control (e.g., a control 204 to adjust the orientation of the seat 104 is located on or near the seat 104, a control 204 to control an entertainment system may be located on or near the entertainment system, and so on).

Further, the controls 204 may correspond to various modes of controlling aspects of the mini-suite 102. For example, some controls 204 may correspond with mechanical controls (e.g., the orientation of the seat 104 and the orientation of the secondary furniture 106 are adjusted manually) and some controls 204 may correspond with electrical (e.g., signal-based) controls (e.g., the orientation of the seat 104 and the orientation of the secondary furniture 106 are adjusted with electronic actuators). By way of another example, all controls 204 in the mini-suite 102 may correspond to electrical controls. By way of yet another example, all controls 204 in the mini-suite 102 may correspond to electrical controls.

In this way, the controls 204 may be configured to adjust the position of the seat 104 between the sitting position, the slouched position, or the berthed position.

For instance, a subset of the controls 204 may correspond with the adjustment nature of the seat 104, armrest 104d, secondary furniture 106, and/or the console 110. It is contemplated that some, or all, of the seat 104, armrest 104d, secondary furniture 106, and the console 110 may be adjustable by mechanical means. In this way, the controls 204 may include, but are not limited to, a button or a latch. This may allow the mechanical controls to engage or disengage any mechanism known in the art suitable for restraining and/or allowing orientation changes (e.g., an air piston, a latch catch, or the like).

It should also be noted that some, or all, of the seat 104, armrest 104d, secondary furniture 106, and the console 110 may be adjustable by electrical means. In this way, the controls 204 may include, but are not limited to, a button. Pushing the button may cause an electrical signal to be sent causing an electronic actuator to adjust the orientation of some, or all, of the seat 104, armrest 104d, secondary furniture 106, and the console 110.

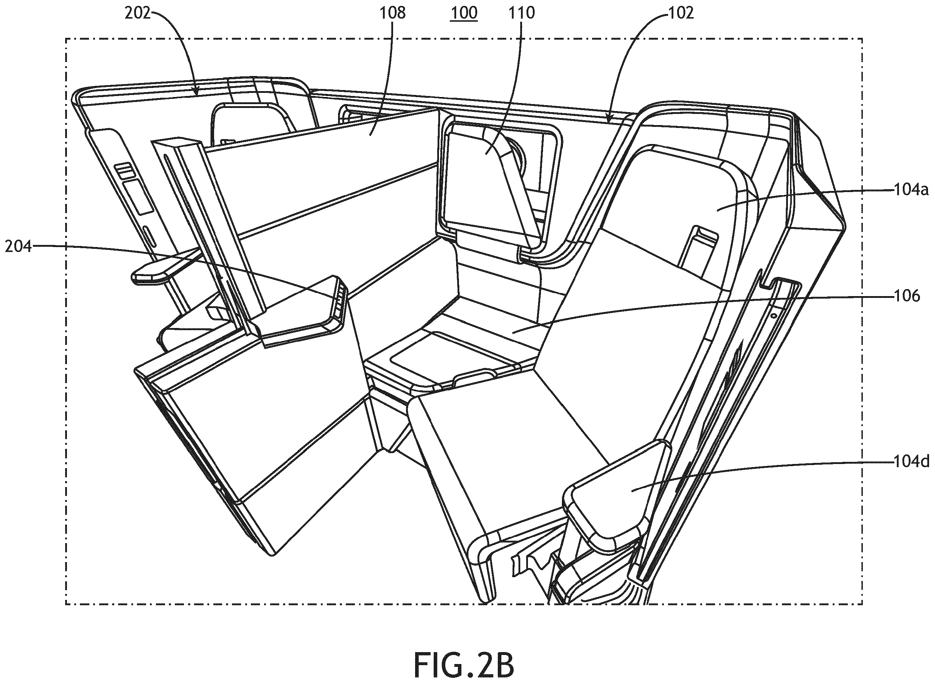

FIG. 2B is a perspective view of a mini-suite 102 with a partition 108 engaged and preventing access to an adjacent mini-suite 202, in accordance with one or more embodiments of the present disclosure.

In FIG. 2B, it can be seen that the height of the partition 108 largely blocks the view of the other mini-suite 102. In this way, privacy may be enhanced from that of a standard aircraft seat. However, the partition 108 need not extend to the top of the mini-suite 102, but may be any height. The partition 108 may also be adjustable. Therefore, passengers may choose to have some level of privacy, between the extremes of the partition 108 being fully engaged (e.g., total privacy) or the partition 108 being fully disengaged (e.g., no privacy).

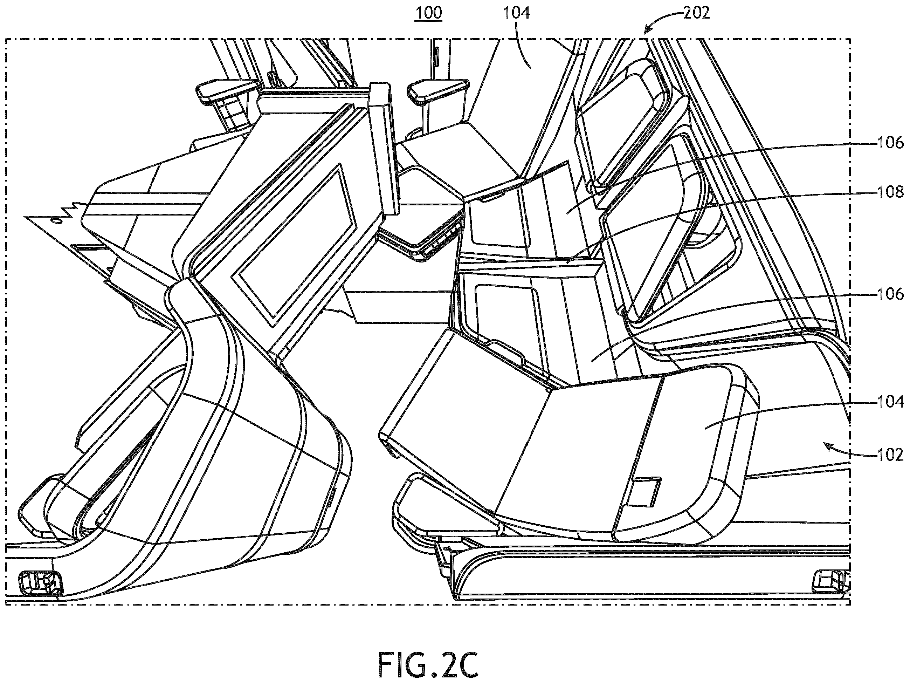

FIG. 2C is a top perspective view of a mini-suite 102 with a partition 108 disengaged and allowing access to an adjacent mini-suite 202, in accordance with one or more embodiments of the present disclosure.

In FIG. 2C, it can be seen that the partition 108 is fully disengaged. In a fully disengaged position, the partition 108 may slide between the secondary furniture 106 of the mini-suite 102 and the adjacent mini-suite 202. In this way, the separation between the mini-suite 202 and the adjacent mini-suite 202 may be removed, and a shared area may be formed between the mini-suite 102 and the adjacent mini-suite 202.

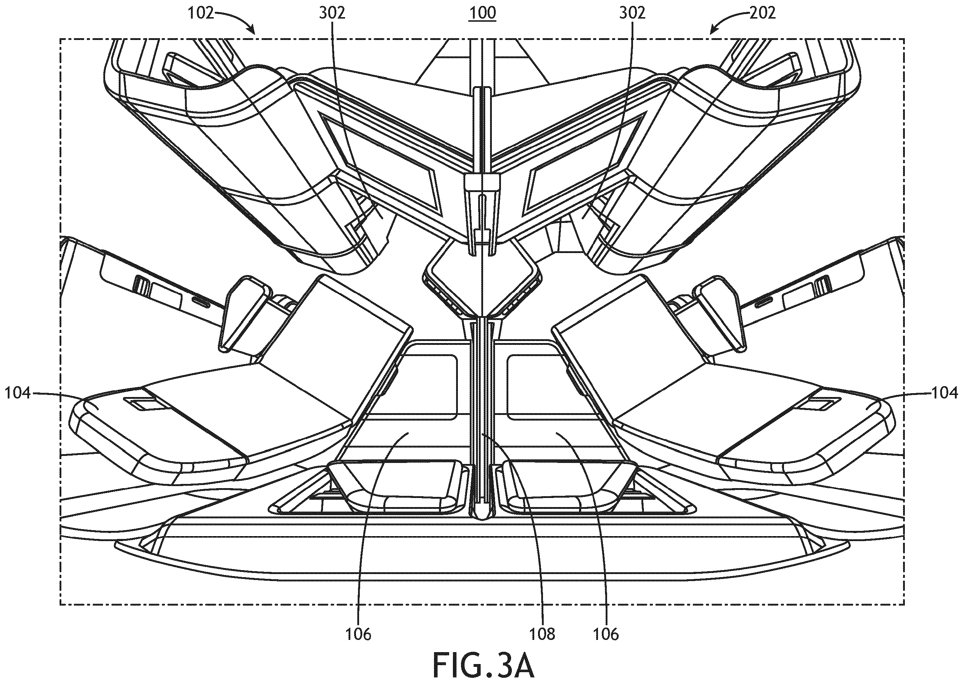

FIG. 3A is a top view of a mini-suite 102 and an adjacent mini-suite with seats in a sitting position, in accordance with one or more embodiments of the present disclosure.

Here, passengers may choose to either sit in the seat 104 or on the secondary furniture 106. For example, two passengers sitting on the secondary furniture without the partition 108 engaged may be as close as they would be in a normal seat. However, the mini-suite may give the passengers more room or other comforts.

In embodiments, each mini-suite 102 may also include a forward cavity 302. The forward cavity 302 may extend under a center console of a forward mini-suite. The forward cavity 302 may be used for extra legroom for the seating arrangement 100.

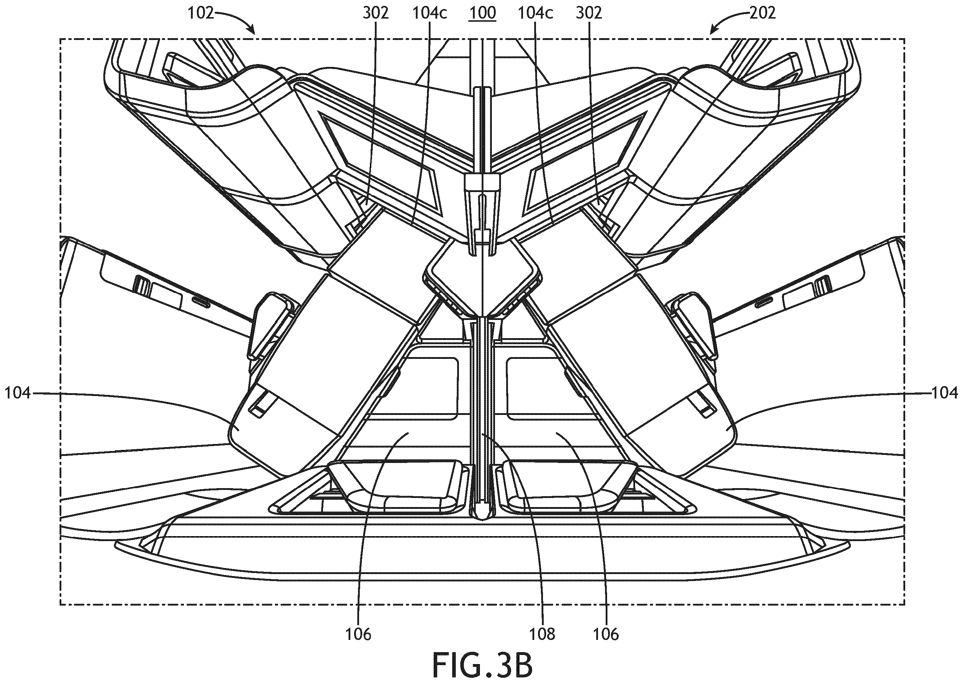

FIG. 3B is a top view of a mini-suite 102 and an adjacent mini-suite with seats in a berthed position, in accordance with one or more embodiments of the present disclosure.

Here, the seats 104 are in the berthed position. When the seats are in the berthed position, the footrest 104c may extend in such a manner as so as to fit within the forward cavity 302. In this way, the forward cavity 302 may provide for space saving when using seats 104 that may be oriented in a berthed position because each row may have some of the length associated with the berthed position placed under a forward row.

Further, like in FIG. 3A, a passenger may choose to use some of the secondary furniture 106 in order to extend their sleeping surface.

Further, it should be noted the chiral nature of the mini-suite 102 and the adjacent mini-suite 202 are depicted in the top views of FIGS. 3A and 3B.

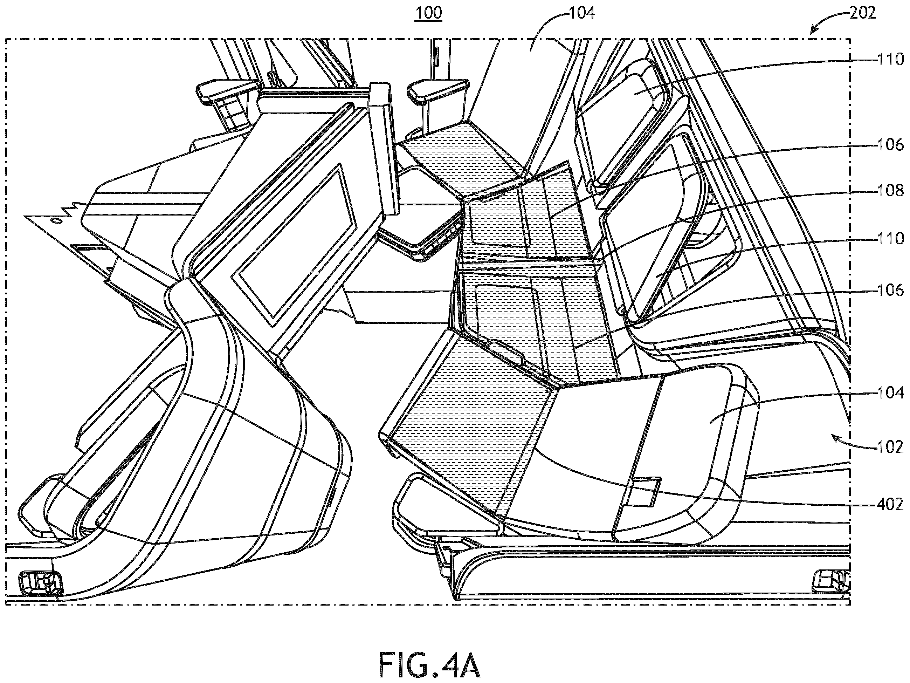

FIG. 4A is a perspective view of a mini-suite 102 and an adjacent mini-suite 202 with seats 104 in a sitting position highlighting a joint sitting area 402, in accordance with one or more embodiments of the present disclosure. A joint sitting area 402 may be formed when the seats 104 (e.g., the seat 104 in the mini-suite 102 and the seat 104 in the adjacent mini-suite 202) are in a sitting position or a slouched position. To form the joint sitting area 402, it may be necessary for the partition 108 to be disengaged, thus providing access between the mini-suite 102 and the adjacent mini-suite 202. Further, the orientation of the secondary furniture 106 (e.g., the secondary furniture 106 in the mini-suite 102 and the secondary furniture 106 in the adjacent mini-suite 202) may be the same. The orientation of the secondary furniture 106 may also be the same as the seats 104 (e.g., the seat bottom 104b). In this way, the joint sitting area 402 may be formed such that there is a uniform orientation between the mini-suite 102 and the adjacent mini-suite 202. Further, as discussed previously herein, the armrest 104d may also be adjustable in a manner that allows it to match the orientation of the seat 104 (e.g., the height and/or angle of the seat 104). In this way, the armrest 104d may further expand the area (e.g., space) of the joint sitting area 402, in the same manner as the secondary furniture 106.

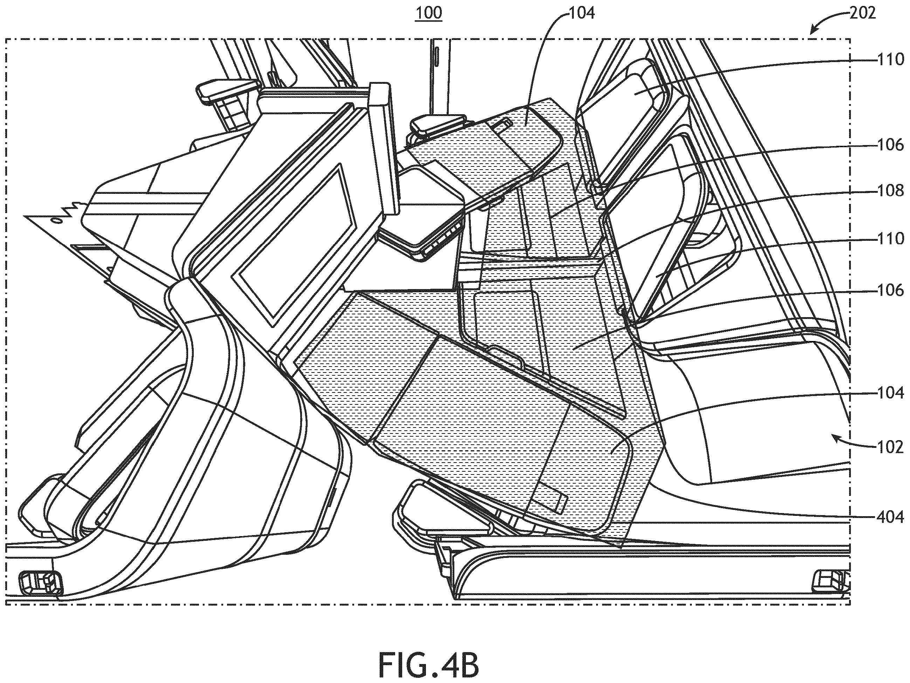

FIG. 4B is a perspective view of a mini-suite 102 and an adjacent mini-suite 202 with seats 104 in a berthed position highlighting a joint sleeping area 404, in accordance with one or more embodiments of the present disclosure. A joint sleeping area 404 may be formed when the seats 104 (e.g., the seat 104 in the mini-suite 102 and the seat 104 in the adjacent mini-suite 202) are in a berthed position. To form the joint sleeping area 404, it may be necessary for the partition 108 to be disengaged, thus providing access between the mini-suite 102 and the adjacent mini-suite 202. Further, the orientation of the secondary furniture 106 (e.g., the secondary furniture 106 in the mini-suite 102 and the secondary furniture 106 in the adjacent mini-suite 202) may be the same. The orientation of the secondary furniture 106 may also be the same as the seats 104 (e.g., the seatback 104a, the seat bottom 104b, and/or the footrest 104c). In this way, the joint sleeping area 404 may be formed such that there is a uniform orientation between the mini-suite 102 and the adjacent mini-suite 202. Further, as discussed previously herein, the armrest 104d may also be adjustable in a manner that allows it to match the orientation of the seat 104 (e.g., the height and/or angle of the seat 104). In this way, the armrest 104d may further expand the area (e.g., space) of the joint sleeping area 404, in the same manner as the secondary furniture 106.

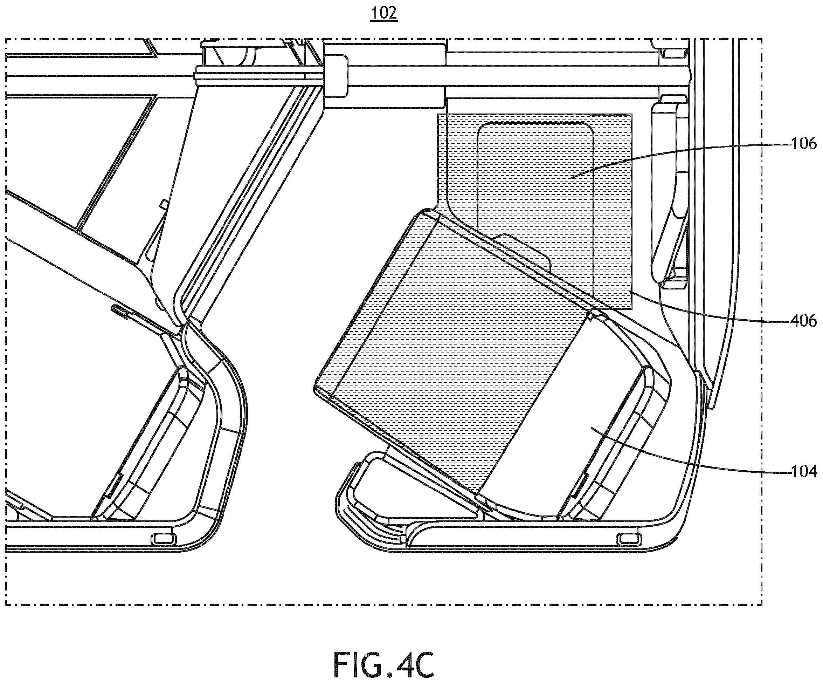

FIG. 4C is a top view of a mini-suite 102 with a seat 104 in a sitting position highlighting an extended seating area 406, in accordance with one or more embodiments of the present disclosure. However, an extended seating area 406 may also be formed when the seat 104 is in the slouched position. It is noted that the orientation (e.g., the angle) of the seat bottom 104b may change between the sitting position and the slouched position (or between various degrees of the slouched position) and therefore, the secondary furniture 106 may be adjustable to match the orientation of the seat bottom 104b in order to create an extended seating area 406. In this way, the extended seating area 406 may be formed when the orientation of the secondary furniture 106 and the orientation of the seat 104 (e.g., the seat bottom 104b) match. Further, as discussed previously herein, the armrest 104d may also be adjustable in a manner that allows it to match the orientation of the seat 104 (e.g., the height and/or angle of the seat 104). In this way, the armrest 104d may further expand the area (e.g., space) of the extended seating area 406, in the same manner as the secondary furniture 106.

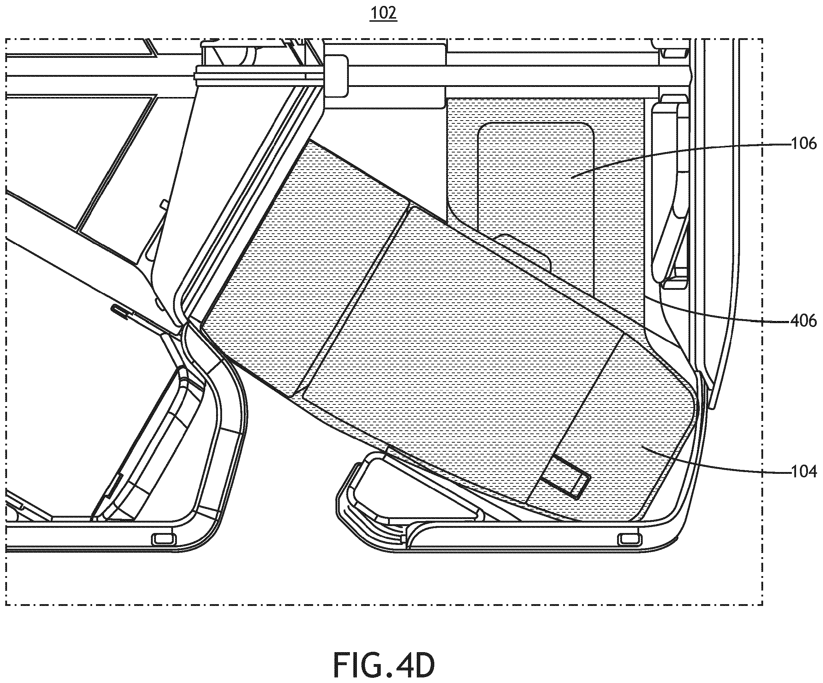

FIG. 4D is a top view of a mini-suite 102 with a seat 104 in a berthed position highlighting an extended sleeping area 408, in accordance with one or more embodiments of the present disclosure. In the berthed position, the seatback 104a, seat bottom 104b, and footrest 104c (e.g., the seat as a whole) may all have a common orientation (e.g., angle) relative to the floor of the aircraft. However, this common angle may be different than the angle of the seat bottom 104b in the sitting position or the slouched position. Therefore, the secondary furniture 106 may be adjustable to match the orientation of the seat 104 when the seat 104 is in the berthed position in order to create an extended sleeping area 408. In this way, the extended sleeping area 408 may be formed when the orientation of the secondary furniture 106 and the orientation of the seat 104 (e.g., the seatback 104a, the seat bottom 104b, and/or the footrest 104c) match. Further, as discussed previously herein, the armrest 104d may also be adjustable in a manner that allows it to match the orientation of the seat 104 (e.g., the height and/or angle of the seat 104). In this way, the armrest 104d may further expand the area (e.g., space) of the extended sleeping area 408, in the same manner as the secondary furniture 106.

Broadly speaking, the joint seating area 402 and the joint sleeping area 404 may be collectively considered as a joint passenger area. A joint passenger area may encompass and configuration where the partition 108 has been disengaged and the mini-suite 102 and the adjacent mini-suite 202 (or the seats 104 and secondary furniture 106 therein) are joined (e.g., not blocked by the partition). Further, it should be noted that a joint passenger area is not limited to configurations where both seats 104 are in the same orientation (e.g., a first seat 104 may be in the sitting position and a second seat 104 may be in the berthed position, a first seat 104 may be in the sitting position and a second seat 104 may be in the slouched position, a first seat 104 may be in the slouched position and a second seat 104 may be in the berthed position, or the like). It should also be noted that a joint passenger area may be formed when the secondary furniture 106 is not adjustable (e.g., the height and/or orientation of the secondary furniture 106 is fixed). Further, a partition 108 may be located between the first piece of secondary furniture 106 and the second piece of secondary furniture 106 such that when the partition is engaged the mini-suite 102 and the adjacent mini-suite 202 are separated. However, the partition 108 may be disengaged (e.g., removed) such that the mini-suite 102 and the adjacent mini-suite 202 are connected and a joint passenger area is formed.

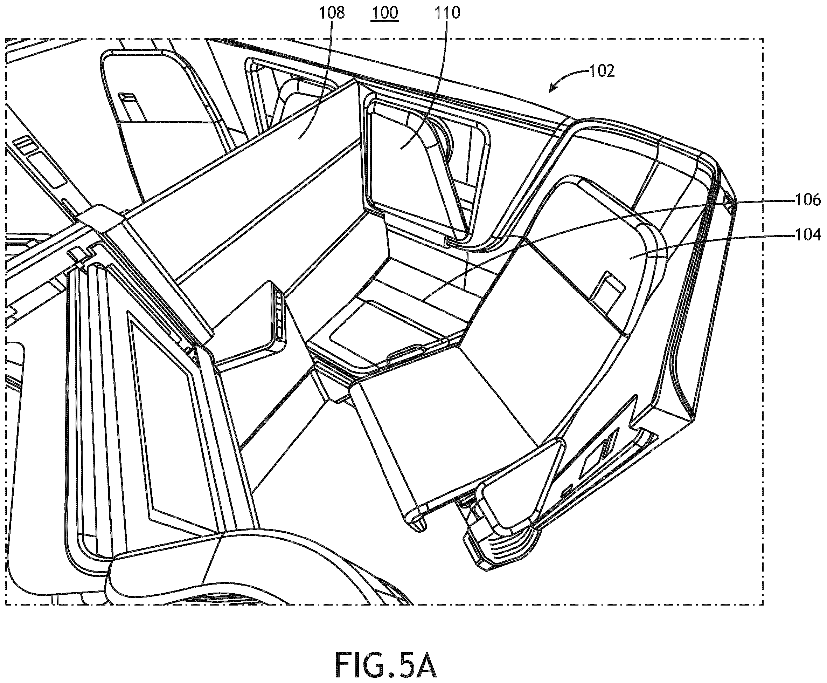

FIG. 5A is a perspective view of a mini-suite 102 with a seat 104 in a sitting position and a console 110 folded into the rear wall of the mini-suite 102, in accordance with one or more embodiments of the present disclosure.

For example, the console 110 may be folded into the rear wall of the mini-suite 102 to form a back rest. The backrest may be used when a passenger is using secondary furniture 106 as extra seating. Further, additional storage may be located behind the console 110 when the console 110 is folded into the back wall of the mini-suite 102.

FIG. 5B is a perspective view of a mini-suite 102 with a seat 104 in a sitting position and a console 110 folded down from the rear wall of the mini-suite 110, in accordance with one or more embodiments of the present disclosure.

For example, the console 110 may be folded down from the rear wall of the mini-suite 102. In this way, the console 110 may form a work surface in the mini-suite 102. The work surface may be suitable for eating, supporting a computer, or the like. When the console 110 is being used as a work surface a passenger may be restricted to sitting in their seat 104, as the console 110 may be positioned over the secondary furniture 106.

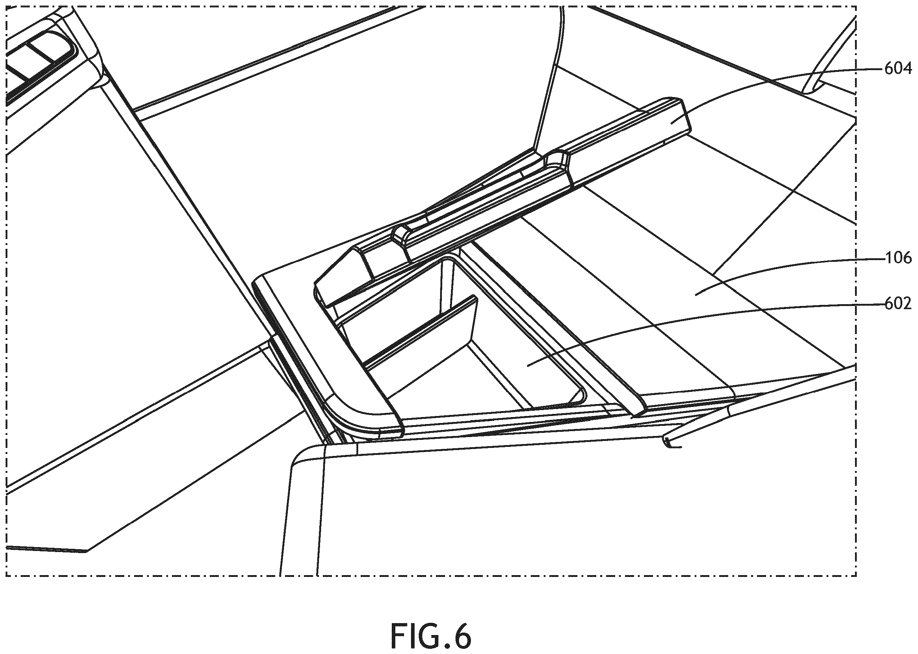

FIG. 6 is a perspective view of secondary furniture 106 including a storage compartment 602, in accordance with one or more embodiments of the present disclosure.

In embodiments, a top surface of the secondary furniture 106 may include a lid 604. The lid 604 may be on hinges or otherwise attached to the top surface of the secondary furniture 106 in a manner that allows the lid 604 to pivot or otherwise open. The lid 604 may allow access to a storage compartment 602 located within the secondary furniture 106. Further, the lid 604 may be made from the same material as the secondary furniture 106 (e.g., and also made from the same material as the seat 104).

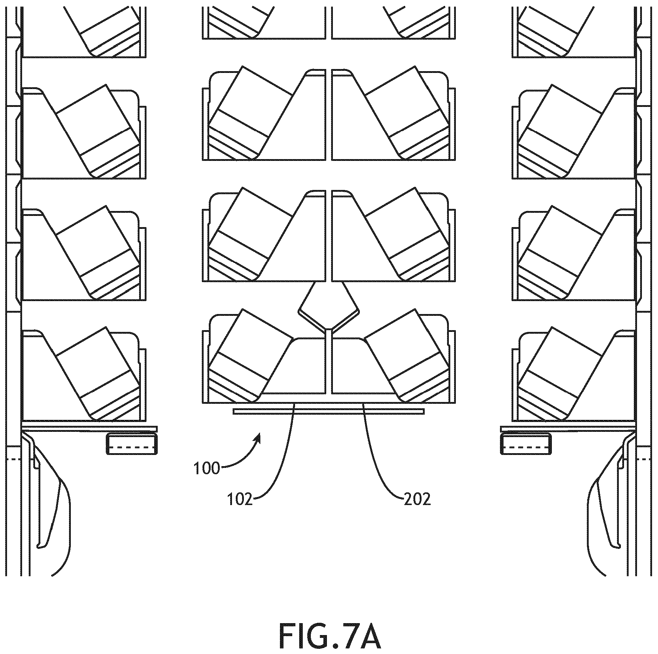

FIG. 7A is a top view highlighting a mini-suite 102 and an adjacent mini-suite 202 located behind reverse herringbone seats, in accordance with one or more embodiments of the present disclosure.

In embodiments, the seating arrangement 100 may be used in a 1-2-1 seating arrangement (e.g., one seat, an aisle, two seats, and aisle, one seat). In this way, the seating arrangement 100 (e.g., the mini-suite 102 and the adjacent mini-suite 202 within the seating arrangement 100) may be the center (e.g., middle) seats in a 1-2-1 seating arrangement. Further, the seating arrangement 100 (e.g., the mini-suite 102 and the adjacent mini-suite 202 within the seating arrangement 100) may be configured in a reverse herringbone manner and may be positioned behind reverse herringbone seats (e.g., seats of the same kind). In this way, the cabin remains largely uniform in its seating configuration.

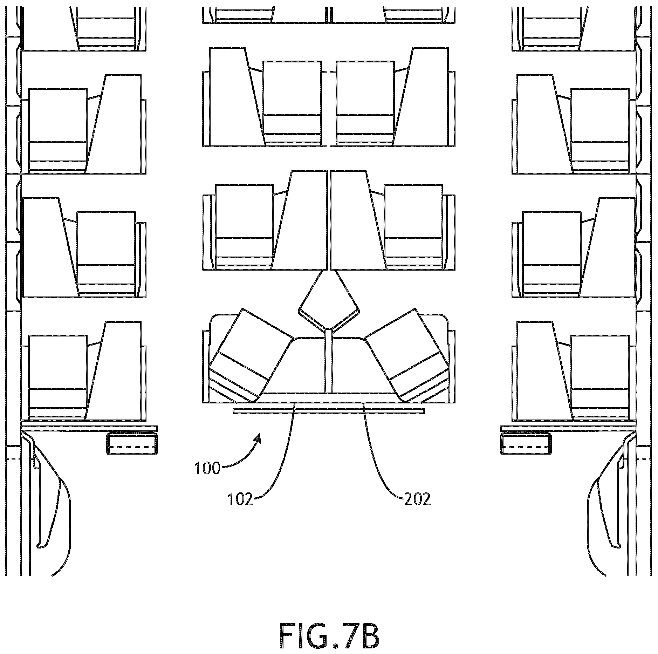

FIG. 7B is a top view highlighting a mini-suite 102 and an adjacent mini-suite 202 located behind forward-facing seats, in accordance with one or more embodiments of the present disclosure. In this way, the seating arrangement 100 may be a unique part of a cabin's seating configuration, as all other seats besides the seats 104 in the mini-suite 102 and the adjacent mini-suite 202 are configured to be in a forward-facing manner.

Components illustrated and described herein are merely examples of a system/device and components that may be used to implement embodiments of the inventive concepts and may be replaced with other devices and components insofar as they do not depart from the scope of the claims. Furthermore, any dimensions, degrees, and/or numerical ranges provided herein are to be understood as non-limiting examples unless otherwise specified in the claims.

## Claims

1. An aircraft seating arrangement, comprising:
two or more mini-suites (102), wherein the two or more mini-suites (102) are adjacent to each other, and
a partition (108), wherein the partition (108) is configured to be adjustable in order to prevent access to the adjacent mini-suite (102) when the partition (108) is engaged and allow access to the adjacent mini-suite (102) when the partition (108) is disengaged,
wherein each of the two or more mini-suites (102) comprises:
a seat (104), comprising a footrest (104c), a seat bottom (104b), and a seatback (104a), wherein the seat (104) is configured to be independently oriented in at least a sitting position and a berthed position and, optionally, in a slouched position;
secondary furniture (106) disposed between the seat (104) and the partition (108), wherein the secondary furniture (106) is adjustable to match the orientation of the seat (104) when the seat (104) is in any of the sitting position, the slouched position, or the berthed position and match the orientation of adjacent secondary furniture (106) located in the adjacent mini-suite, wherein the secondary furniture (106) provides an extended seating area when the seat (104) is in the sitting position or an extended sleeping area when the seat (104) is in the berthed position;
a console (110), wherein the console (110) is mounted on a rear wall of the mini-suite (102) and is configured to provide a secondary backrest when folded into the rear wall and when a passenger is using the secondary furniture (106) as extra seating or to provide a work surface when folded down from the rear wall;
a storage compartment (602), wherein the storage compartment (602) is located below the secondary furniture (106); and
a forward cavity (302), wherein the footrest (104c) of the seat (104) is configured to extend at least partway into the forward cavity (302) when the seat (104) is in the berthed position.

2. The aircraft seating arrangement of claim 1, wherein the forward cavity (302) is configured to extend under a center console of a forward mini-suite.

3. The aircraft seating arrangement of any preceding claim, wherein the seat (104), the secondary furniture (106), the adjacent secondary furniture, and an adjacent seat in the adjacent mini-suite form a joint seating area when:
the orientation of the secondary furniture (106) matches the orientation of the seat (104);
the orientation of the adjacent secondary furniture matches the orientation of the adjacent seat;
the orientation of the secondary furniture matches the orientation of the adjacent secondary furniture;
the partition (108) is disengaged; and
the seat (104) and the adjacent seat are oriented in the sitting position or the slouched position.

4. The aircraft seating arrangement of any preceding claim, wherein the seat (104), the secondary furniture (106), the adjacent secondary furniture, and an adjacent seat in the adjacent mini-suite form a joint sleeping area when:
the orientation of the secondary furniture (106) matches the orientation of the seat (104);
the orientation of the adjacent secondary furniture matches the orientation of the adjacent seat;
the orientation of the secondary furniture (106) matches the orientation of the adjacent secondary furniture;
the partition (108) is disengaged; and
the seat (104) and the adjacent seat are oriented in berthed position.

5. The aircraft seating arrangement of any preceding claim, wherein the orientation of the seat (104) and the orientation of the secondary furniture (106) are manually adjustable.

6. The aircraft seating arrangement of any of claims 1 to 4, wherein the orientation of the seat (104) and the orientation of the secondary furniture (106) are configured to be adjusted with electronic actuators.

7. The aircraft seating arrangement of claim 6, wherein each mini-suite (102) further comprises seat controllers, the seat controllers configured to adjust the position of the seat (104) between the sitting position, the slouched position, and the berthed position when the orientation of the seat (104) is adjusted with the electronic actuators.

8. The aircraft seating arrangement of claim 7, wherein, the seat controllers are configured to control the orientation of the secondary furniture (106).

9. The aircraft seating arrangement of any preceding claim wherein each mini-suite (102) is configured in a reverse herringbone manner.

10. The aircraft seating arrangement of any preceding wherein each mini-suite (102) is configured to be located behind a forward mini-suite configured in one of a reverse herringbone manner or a forward-facing manner.

11. The aircraft seating arrangement of any preceding claim, wherein a top surface of the secondary furniture (106) is made from the same material as the seat (104).

12. The aircraft seating arrangement of any preceding claim, wherein each mini-suite (102) further comprises an armrest (104d), wherein the armrest (104d) is disposed on the opposite side of the suite as the secondary furniture (106).

13. The aircraft seating arrangement of claim 12, wherein an orientation of the armrest (104d) is adjustable to match the orientation of the seat (104) in any of the sitting position, the slouched position, or the berthed position.

14. The aircraft seating arrangement of any preceding claim, wherein each mini-suite (102) is configured to be located in an aft row of a cabin; and/or
wherein the mini-suite (102) and the adjacent mini-suite are two center seats in a 1-2-1 aircraft seating configuration.

15. The aircraft seating arrangement of any preceding claim, wherein the secondary furniture is built into walls of the mini-suite.

## Patentansprüche

1. Flugzeugsitzanordnung, umfassend:
zwei oder mehr Mini-Suiten (102), wobei die zwei oder mehr Mini-Suiten (102) benachbart zueinander liegen, und
eine Trennwand (108), wobei die Trennwand (108) dazu ausgelegt ist, verstellbar zu sein, um einen Zugang zu der benachbarten Mini-Suite (102) zu verhindern, wenn die Trennwand (108) in Eingriff ist, und einen Zugang zu der benachbarten Mini-Suite (102) zu ermöglichen, wenn die Trennwand (108) außer Eingriff ist,
wobei jede der zwei oder mehr Mini-Suiten (102) umfasst:
einen Sitz (104), der eine Fußstütze (104c), eine Sitzfläche (104b) und eine Rückenlehne (104a) umfasst, wobei der Sitz (104) dazu ausgelegt ist, unabhängig in mindestens eine Sitzposition und eine Liegeposition sowie optional in eine zurückgelehnte Position gebracht zu werden;
ein Sekundärmöbelstück (106), das zwischen dem Sitz (104) und der Trennwand (108) angeordnet ist, wobei das Sekundärmöbelstück (106) so einstellbar ist, dass es der Ausrichtung des Sitzes (104) entspricht, wenn sich der Sitz (104) in der Sitzposition, der zurückgelehnten Position oder der Liegeposition befindet, und der Ausrichtung eines benachbarten Sekundärmöbelstücks (106), das sich in der benachbarten Mini-Suite befindet, entspricht, wobei das Sekundärmöbelstück (106) einen erweiterten Sitzbereich bereitstellt, wenn sich der Sitz (104) in der Sitzposition befindet, oder einen erweiterten Schlafbereich, wenn sich der Sitz (104) in der Liegeposition befindet;
eine Konsole (110), wobei die Konsole (110) an einer Rückwand der Mini-Suite (102) montiert ist und dazu ausgelegt ist, eine sekundäre Rückenlehne bereitzustellen, wenn sie in die Rückwand eingeklappt ist und wenn ein Passagier das Sekundärmöbelstück (106) als zusätzliche Sitzgelegenheit nutzt, oder eine Arbeitsfläche bereitzustellen, wenn sie aus der Rückwand heruntergeklappt ist;
ein Staufach (602), wobei sich das Staufach (602) unterhalb des Sekundärmöbelstücks (106) befindet; und
einen vorderen Hohlraum (302), wobei die Fußstütze (104c) des Sitzes (104) dazu ausgelegt ist, sich zumindest teilweise in den vorderen Hohlraum (302) zu erstrecken, wenn sich der Sitz (104) in der Liegeposition befindet.

2. Flugzeugsitzanordnung nach Anspruch 1, wobei der vordere Hohlraum (302) dazu ausgelegt ist, sich unter einer Mittelkonsole einer vorderen Mini-Suite zu erstrecken.

3. Flugzeugsitzanordnung nach einem der vorhergehenden Ansprüche, wobei der Sitz (104), das Sekundärmöbelstück (106), das benachbarte Sekundärmöbelstück und ein benachbarter Sitz in der benachbarten Mini-Suite einen gemeinsamen Sitzbereich bilden, wenn:
die Ausrichtung des Sekundärmöbelstücks (106) der Ausrichtung des Sitzes (104) entspricht;
die Ausrichtung des benachbarten Sekundärmöbelstücks der Ausrichtung des benachbarten Sitzes entspricht;
die Ausrichtung des Sekundärmöbelstücks der Ausrichtung des benachbarten Sekundärmöbelstücks entspricht;
die Trennwand (108) außer Eingriff ist; und
der Sitz (104) und der benachbarte Sitz sind in der Sitzposition bzw. in der zurückgelehnten Position ausgerichtet sind.

4. Flugzeugsitzanordnung nach einem der vorhergehenden Ansprüche, wobei der Sitz (104), das Sekundärmöbelstück (106), das benachbarte Sekundärmöbelstück und ein benachbarter Sitz in der benachbarten Mini-Suite einen gemeinsamen Schlafbereich bilden, wenn:
die Ausrichtung des Sekundärmöbelstücks (106) der Ausrichtung des Sitzes (104) entspricht;
die Ausrichtung des benachbarten Sekundärmöbelstücks der Ausrichtung des benachbarten Sitzes entspricht;
die Ausrichtung des Sekundärmöbelstücks (106) der Ausrichtung des benachbarten Sekundärmöbelstücks entspricht;
die Trennwand (108) außer Eingriff ist; und
der Sitz (104) und der benachbarte Sitz sind in der Liegeposition ausgerichtet sind.

5. Flugzeugsitzanordnung nach einem der vorhergehenden Ansprüche, wobei die Ausrichtung des Sitzes (104) und die Ausrichtung des Sekundärmöbelstücks (106) manuell einstellbar sind.

6. Flugzeugsitzanordnung nach einem der Ansprüche 1 bis 4, wobei die Ausrichtung des Sitzes (104) und die Ausrichtung des Sekundärmöbelstücks (106) dazu ausgelegt sind, mit elektronischen Betätigungseinrichtungen eingestellt zu werden.

7. Flugzeugsitzanordnung nach Anspruch 6, wobei jede Mini-Suite (102) ferner Sitzsteuerungen umfasst, wobei die Sitzsteuerungen dazu ausgelegt sind, die Position des Sitzes (104) zwischen der Sitzposition, der zurückgelehnten Position und der Liegeposition einzustellen, wenn die Ausrichtung des Sitzes (104) mit den elektronischen Betätigungseinrichtungen eingestellt wird.

8. Flugzeugsitzanordnung nach Anspruch 7, wobei die Sitzsteuerungen dazu ausgelegt sind, die Ausrichtung des Sekundärmöbelstücks (106) zu steuern.

9. Flugzeugsitzanordnung nach einem der vorhergehenden Ansprüche, wobei jede Mini-Suite (102) dazu ausgelegt ist, in einer umgekehrten Fischgrätenanordnung angeordnet zu sein.

10. Flugzeugsitzanordnung nach einem der vorhergehenden Ansprüche, wobei jede Mini-Suite (102) dazu ausgelegt ist, sich hinter einer vorderen Mini-Suite zu befinden, die entweder in einer umgekehrten Fischgrätenanordnung oder in einer nach vorne gerichteten Anordnung ausgelegt ist.

11. Flugzeugsitzanordnung nach einem der vorhergehenden Ansprüche, wobei eine obere Fläche des Sekundärmöbelstücks (106) aus demselben Material wie der Sitz (104) besteht.

12. Flugzeugsitzanordnung nach einem der vorhergehenden Ansprüche, wobei jede Mini-Suite (102) ferner eine Armlehne (104d) umfasst, wobei die Armlehne (104d) auf der dem Sekundärmöbelstück (106) gegenüberliegenden Seite der Suite angeordnet ist.

13. Flugzeugsitzanordnung nach Anspruch 12, wobei eine Ausrichtung der Armlehne (104d) einstellbar ist, um der Ausrichtung des Sitzes (104) in der Sitzposition, der Liegeposition oder der zurückgelehnten Position zu entsprechen.

14. Flugzeugsitzanordnung nach einem der vorhergehenden Ansprüche, wobei jede Mini-Suite (102) dazu ausgelegt ist, sich in einer hinteren Reihe einer Kabine zu befinden; und/oder wobei die Mini-Suite (102) und die benachbarte Mini-Suite zwei Mittelsitze in einer 1-2-1-Flugzeugsitzkonfiguration sind.

15. Flugzeugsitzanordnung nach einem der vorhergehenden Ansprüche, wobei das Sekundärmöbelstück in Wände der Mini-Suite eingebaut ist.

## Revendications

1. Agencement d'assise d'aéronef, comprenant :
deux ou plusieurs mini-suites (102), dans lequel les deux ou plusieurs mini-suites (102) sont adjacentes les unes aux autres, et
une cloison (108), dans lequel la cloison (108) est configurée pour être ajustable afin d'empêcher l'accès à la mini-suite adjacente (102) lorsque la cloison (108) est en prise et d'autoriser l'accès à la mini-suite adjacente (102) lorsque la cloison (108) est désolidarisée,
dans lequel chacune des deux ou plusieurs mini-suites (102) comprend :
un siège (104), comprenant un repose-pieds (104c), une partie inférieure de siège (104b) et un dossier (104a), dans lequel le siège (104) est configuré pour être orienté indépendamment dans au moins une position assise et une position couchée et, éventuellement, dans une position inclinée ;
un meuble secondaire (106) disposé entre le siège (104) et la cloison (108), dans lequel le meuble secondaire (106) est ajustable pour correspondre à l'orientation du siège (104) lorsque le siège (104) se trouve dans l'une quelconque parmi la position assise, la position couchée ou la position inclinée, et pour correspondre à l'orientation du meuble secondaire adjacent (106) situé dans la mini-suite adjacente, dans lequel le meuble secondaire (106) offre une zone d'assise étendue lorsque le siège (104) se trouve dans la position assise ou une zone de couchage étendue lorsque le siège (104) se trouve dans la position inclinée ;
une console (110), dans lequel la console (110) est montée sur une paroi arrière de la mini-suite (102) et est configurée pour fournir un dossier secondaire lorsqu'elle est repliée à l'intérieur de la paroi arrière et lorsqu'un passager utilise le meuble secondaire (106) comme assise supplémentaire ou pour offrir une surface de travail lorsqu'elle est repliée vers le bas à partir de la paroi arrière ;
un compartiment de stockage (602), dans lequel le compartiment de stockage (602) est situé sous le meuble secondaire (106) ; et
une cavité avant (302), dans lequel le repose-pieds (104c) du siège (104) est configuré pour s'étendre au moins à mi-chemin à l'intérieur de la cavité avant (302) lorsque le siège (104) ses trouve dans la position inclinée.

2. Agencement d'assise d'aéronef selon la revendication 1, dans lequel la cavité avant (302) est configurée pour s'étendre sous une console centrale d'une mini-suite avant.

3. Agencement d'assise d'aéronef selon une quelconque revendication précédente, dans lequel le siège (104), le meuble secondaire (106), le meuble secondaire adjacent et un siège adjacent dans la mini-suite adjacente forment une zone d'assise conjointe lorsque :
l'orientation du meuble secondaire (106) correspond à l'orientation du siège (104) ;
l'orientation du meuble secondaire adjacent correspond à l'orientation du siège adjacent ;
l'orientation du meuble secondaire correspond à l'orientation du meuble secondaire adjacent ;
la cloison (108) est désolidarisée ; et
le siège (104) et le siège adjacent sont orientés dans la position assise ou la position couchée.

4. Agencement d'assise d'aéronef selon une quelconque revendication précédente, dans lequel le siège (104), le meuble secondaire (106), le meuble secondaire adjacent et un siège adjacent dans la mini-suite adjacente forment une zone de couchage conjointe lorsque :
l'orientation du meuble secondaire (106) correspond à l'orientation du siège (104) ;
l'orientation du meuble secondaire adjacent correspond à l'orientation du siège adjacent ;
l'orientation du meuble secondaire (106) correspond à l'orientation du meuble secondaire adjacent ;
la cloison (108) est désolidarisée ; et
le siège (104) et le siège adjacent sont orientés dans la position inclinée.

5. Agencement de siège d'aéronef selon une quelconque revendication précédente, dans lequel l'orientation du siège (104) et l'orientation du meuble secondaire (106) sont ajustables manuellement.

6. Agencement de siège d'aéronef selon l'une quelconque des revendications 1 à 4, dans lequel l'orientation du siège (104) et l'orientation du meuble secondaire (106) sont configurées pour être ajustées à l'aide d'actionneurs électroniques.

7. Agencement de siège d'aéronef selon la revendication 6, dans lequel chaque mini-suite (102) comprend en outre des dispositifs de commande de siège, les dispositifs de commande de siège étant configurés pour ajuster la position du siège (104) entre la position assise, la position couchée et la position inclinée lorsque l'orientation du siège (104) est ajustée à l'aide des actionneurs électroniques.

8. Agencement de siège d'aéronef selon la revendication 7, dans lequel les dispositifs de commande de siège sont configurés pour commander l'orientation du meuble secondaire (106).

9. Agencement de siège d'aéronef selon une quelconque revendication précédente dans lequel chaque mini-suite (102) est configurée de manière à présenter des chevrons inversés.

10. Agencement de siège d'aéronef selon une quelconque revendication précédente dans lequel chaque mini-suite (102) est configurée pour être située derrière une mini-suite avant configurée dans l'une parmi une manière à présenter des chevrons inversés ou une manière faisant face à l'avant.

11. Agencement de siège d'aéronef selon une quelconque revendication précédente, dans lequel une surface supérieure du meuble secondaire (106) est constituée du même matériau que le siège (104).

12. Agencement de siège d'aéronef selon une quelconque revendication précédente, dans lequel chaque mini-suite (102) comprend en outre un accoudoir (104d), dans lequel l'accoudoir (104d) est disposé sur le côté opposé de la suite par rapport au meuble secondaire (106).

13. Agencement de siège d'aéronef selon la revendication 12, dans lequel une orientation de l'accoudoir (104d) est ajustable de sorte à correspondre à l'orientation du siège (104) dans l'une quelconque parmi la position assise, la position couchée ou la position inclinée.

14. Agencement de siège d'aéronef selon une quelconque revendication précédente, dans lequel chaque mini-suite (102) est configurée pour être située dans une rangée arrière d'une cabine ; et/ou
dans lequel la mini-suite (102) et la mini-suite adjacente sont deux sièges centraux dans une configuration d'assise d'aéronef 1-2-1.

15. Agencement de siège d'aéronef selon une quelconque revendication précédente, dans lequel le meuble secondaire est intégré aux parois de la mini-suite.
